# EUROPÄISCHE PATENTANMELDUNG

(11) **EP 1 815 967 A2**
(43) Veröffentlichungstag der Anmeldung: **08.08.2007**
(21) Anmeldenummer: 07100532.6
(22) Anmeldetag: 15.01.2007
(51) Int. Cl.: B29C 67/00

(54) **Verwendung von Polymerpulver, hergestellt aus einer Dispersion, in einem formgebenden Verfahren und Formkörper, hergestellt aus diesem Polymerpulver**

(30) Priorität: 07.02.2006 DE 102006005500
(71) Anmelder: Degussa GmbH, 40474 Düsseldorf (DE)
(72) Erfinder: Monsheimer, Sylvia, 45721, Haltern am See (DE); Grebe, Maik, 44805, Bochum (DE); Matsui, Hideki, Himeji, Hyogo 671-1212 (JP); Komada, Hajime, Himeji, Hyogo 670-0083 (JP)

(57) **Zusammenfassung**

Die vorliegende Erfindung betrifft ein Polymerpulver, welches aus einer Dispersion hergestellt wurde, und die Verwendung dieses Pulvers für formgebende Verfahren sowie Formkörper, hergestellt aus diesem Polymerpulver. Die Dispersion weist zumindest eine Polymerkomponente und eine wasserlösliche Komponente auf, die wiederum zumindest ein Oligosaccharid aufweist.

Die formgebenden Verfahren sind schichtweise arbeitende Verfahren, die Pulver verwenden, wobei selektiv Bereiche der jeweiligen Schicht durch Einbringen elektromagnetischer Energie aufgeschmolzen werden. Die Selektivität kann - ohne die Erfindung darauf beschränken zu wollen - durch Masken, Auftragung von Inhibitoren, Absorbern oder Suszeptoren oder durch Fokussierung des Energieeintrages erreicht werden. Nach dem Abkühlen können die dann erstarrten Bereiche als Formkörper dem Pulverbett entnommen werden.

Durch die Verwendung von Pulver, hergestellt aus einer Dispersion wie oben beschrieben wird es möglich, dass sich bisher nur durch die klassischen Verfahren wie beispielsweise Kaltmahlen herstellbare Zusammensetzungen durch das oben beschriebene Verfahren in eine pulvrige Form bringen lassen, bei der die Partikel ausreichend rund sind, um eine automatische Verarbeitung in einem pulverbasierenden werkzeuglosen schichtweise arbeitenden Verfahren wie oben beschrieben zu ermöglichen.

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft die Verwendung eines Polymerpulvers, hergestellt aus einer Dispersion, in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen oder durch selektive Auftragung des Pulvers. Der Energieeintrag wird über elektromagnetische Strahlung erreicht.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

Nachteilig bei allen Verfahren ist, dass Pulver mit relativ runder Kornform eingesetzt werden müssen. Dadurch ist die Auswahl der zur Verfügung stehenden Materialien eingeschränkt. So ist es beispielsweise von Nachteil, ein durch Vermahlung erhaltenes Material zu verwenden, da die scharfen Kanten der Partikel schlechte Rieseleigenschaften verursachen. Ein automatischer Bauprozess ist erschwert, da immer wieder Riefen beim Legen der Pulverschichten entstehen, die im schlimmsten Fall zum Abbruch des Bauprozesses führen, in jedem Fall aber die Qualität der so entstehenden Bauteile verschlechtern, insbesondere die Dichte und die Oberflächenbeschaffenheit.
Weitere Prozesse zur Herstellung runder Partikel sind aus anderen Gründen auf wenige Materialien beschränkt. Als Beispiel sei die anionische Polymerisation genannt, die ein schlecht definiertes Produkt hervorbringt, und zudem nicht die Zugabe von Additiven wie beispielsweise Stabilisatoren bereits im Herstellprozess ermöglicht.
Auch der Fällprozess wie in DE19747309 beschrieben bedingt die Lösbarkeit des Polymeren in einem Lösemittel und die Ausfällbarkeit unter geeigneten Bedingungen. Amorphe Polymere sowie Copolymere sind mit den beschriebenen Methoden nicht in die Form eines Pulvers mit runden Partikeln zu bekommen. Für nicht oder nur schwer lösbare Polymere wie beispielsweise PBT gelten die gleichen Einschränkungen.

Eine weitere Schwierigkeit besteht, wenn Additive wie beispielsweise Flammschutzmittel oder Schlagzähmodifier in dem Pulver enthalten sein müssen. Üblicherweise werden diese in Mengen über 1 Gewichtsprozent im Endprodukt benötigt, um die gewünschte Wirkung zu erzielen; dadurch verbieten sich in der Regel Prozesse wie die anionische Polymerisation oder ein Fällprozess. Beide Komponenten getrennt in Pulverform zu bringen und anschließend im Dry Blend zu vermischen hat den Nachteil, dass keine gute Durchmischung der Komponenten erreicht wird, und erst recht keine Wechselwirkungen aufgebaut werden können. So ist es für eine Schlagzähmodifizierung vorteilhaft, wenn die schlagzähe Komponente an das Basispolymer anbindet. Außerdem droht eine Dry-Blendmischung bei der Verarbeitung in einem Rapid Prototyping- oder Rapid Manufacturing-Verfahren wie oben beschrieben die Entmischung der beiden Komponenten, besonders, wenn die Partikel stark unterschiedlich beschaffen sind oder eine deutlich unterschiedliche Dichte aufweisen.
Die Herstellung eines Compounds sowie die anschließende Kaltvermahlung führt ebenfalls nicht zu zufriedenstellenden Ergebnissen, und zwar aus mehreren Gründen. Zum einen können die Polymere und auch die Additive durch die Compoundierung selber in Mitleidenschaft gezogen werden. Zum anderen ist die Kaltvermahlung je nach Polymer oder Additiv sehr ineffizient, so dass sich eine Kommerzialisierung eines derart hergestellten Pulvers verbietet. Beispielhaft seinen hier schlagzäh modifizierte Polymere genannt, bei denen der Schlagzähmodifier, unabhängig davon, ob er während der Compoundierung an das Polymer angebunden hat oder nicht, zu einer sehr geringen Ausbeute führt - Werte von weniger als 30 % seien beispielhaft genannt. Ebenfalls sehr schlecht vermahlbar sind Polymere, die in ihrer Polymerklasse am oberen Ende bezüglich des Molekulargewichtes liegen, was aber gerade für die mechanischen Eigenschaften von Vorteil ist.

Aufgabe der vorliegenden Erfindung war es deshalb, eine Möglichkeit zu finden, aus den bisher nicht in runder Kornform und ausreichend feinem Kornschnitt zur Verfügung stehenden Polymeren bzw. Copolymeren Teile herzustellen. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von Polymerpulvern, die aus einer Dispersion hergestellt wurden, in einem schichtweise arbeitenden Verfahren, bei welchem selektiv Bereiche der jeweiligen Pulverschicht aufgeschmolzen werden, Formteile produzieren lassen, wobei eine sichere Verarbeitung von nahezu allen Polymeren bzw. Copolymeren möglich ist. Die Dispersion weist zumindest eine Polymerkomponente und eine wasserlösliche Hilfskomponente auf, wobei die Hilfskomponente wiederum zumindest ein Oligosaccharid aufweist. Durch die Verwendung von Pulver hergestellt aus einer Dispersion wie oben beschrieben wird es möglich, dass sich bisher nur durch die klassischen Verfahren wie beispielsweise Kaltmahlen herstellbare Zusammensetzungen durch das oben beschriebene Verfahren in eine pulvrige Form bringen lassen, bei der die Partikel ausreichend rund sind, um eine automatische Verarbeitung in einem pulverbasierenden werkzeuglosen schichtweise arbeitenden Herstellverfahren (RP- und RM-Verfahren wie oben beschrieben) zu ermöglichen.

Gegenstand der vorliegenden Erfindung ist deshalb die Verwendung eines Polymerpulvers zum Verarbeiten in einem schichtweise arbeitenden Verfahren, bei welchem selektiv Bereiche der jeweiligen Schicht aufgeschmolzen werden, welches dadurch gekennzeichnet ist, dass das Pulver aus einer Dispersion hergestellt wurde. Die Partikel weisen dabei keine scharfen Kanten auf, wie sie beispielsweise vom Mahlpulver dem Fachmann bekannt sind. Die Dispersion weist zumindest eine Polymerkomponente und eine wasserlösliche Hilfskomponente auf, die wiederum zumindest ein Oligosaccharid aufweist. Die Herstellung solcher Pulver ist in der EP 1 512 725 beschrieben, die in vollem Umfang zur Offenbarung der vorliegenden Erfindung gehören soll. Gleiches gilt für die japanische Patentanmeldung JP. 2005-156460, die am 27.5.2005 eingereicht wurde, Titel: "Production method of resin particles".

Die Verwendung von Polymerpulver, hergestellt aus einer Dispersion, hat den Vorteil, dass aus ihm durch ein schichtweise arbeitendes Verfahren, bei dem selektiv Bereiche der jeweiligen Schicht aufgeschmolzen werden, hergestellte Formkörper Polymere bzw. Copolymere aufweisen können, die sich bisher der Verarbeitbarkeit in den obengenannten Verfahren verschlossen haben. Damit können ganz andere Eigenschaften erschlossen werden als bisher möglich. So können beispielsweise Copolymere oder amorphe Polymere zur Erzielung von Transparenz oder Schlagzähigkeit an den Formkörpern nun in den beschriebenen Verfahren eingesetzt werden.

Das Polymerpulver sowie dessen erfindungsgemäße Verwendung wird nachfolgend beschrieben, ohne dass die Erfindung darauf beschränkt sein soll. Der Begriff Polymer sei in dieser Beschreibung so ausgelegt, dass auch Copolymere umfasst sind.

Das Polymerpulver zum Verarbeiten in einem schichtweise arbeitenden Verfahren, bei welchem selektiv Bereiche der jeweiligen Schicht aufgeschmolzen werden, zeichnet sich dadurch aus, dass das Pulver aus einer Dispersion hergestellt wurde, die zumindest eine Polymerkomponente und eine wasserlösliche Hilfskomponente aufweist, wobei die Hilfskomponente wiederum zumindest ein Oligosaccharid aufweist.

### Die Polymerkomponente

Die Polymerkomponente weist ein wasserunlösliches Polymeres oder ein thermoplastisches Polymer oder ein Duromer oder auch Kombinationen daraus auf. Beispiele für das thermoplastische Polymer sind Polykondensate wie Polyester, aliphatisch oder aromatisch, Polyamide, Copolyamide, Polyurethane, Poly-(thio)-ether, Polycarbonat, Polysulfon, Polyimid, aber auch Polymerisate wie Poylolefine, Methacrylate, Polystyrol, vinylbasierende Polymere, sowie Produkte, die von Naturstoffen abgeleitet sind wie beispielsweise Cellulosederivate. Auch Copolymere seien erwähnt. Beispiel für das Duromer sind Epoxyharze, ungesättigte Polyester, Diallylphtalate, sowie Silicone. Besonders erwähnt seien thermoplastische Elastomere, beispielsweise auf Basis von Polyamid, Polyester, Polyvinylchlorid, oder Fluorpolymeren. Ebenfalls erwähnt werden Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, Polylactide, Polyoxyalkylene, Poly-(N-methylmethacrylimide) (PMMI), Polymethylmethacrylat (PMMA), lonomer, Silikonpolymere, Terpolymere, Acrylnitril-Butadien-StyrolCopolymere (ABS) oder Gemische davon.

### Wasserlösliche Hilfskomponente

Die wasserlösliche Hilfskomponente weist zumindest ein Oligosaccharid auf. Sie wird zusammen mit der Polymerkomponente verwendet und bildet mit ihr zusammen eine Dispersion. Zur Einstellung des Schmelzpunktes des Oligosccharid ist es vorteilhaft, wenn die wasserlösliche Komponente zusätzlich einen Weichmacher aufweist.

### Oligosaccharid

Die Oligosaccharide können in zwei Gruppen aufgeteilt werden: zum einen Homooligosaccharide, entstanden aus Dehydratisierung von 2 bis 10 Monosaccharidmolekülen durch Glykosid-Verbindungen, zum anderen Heterooligosaccharide, hergestellt aus Dehydratisierung von 2 bis 10 Molekülen von zumindest 2 verschiedenen Molekülen aus der Gruppe der Monosaccharide und Zuckeralkohole durch Glykosid-Verbindungen.
Die Oligosaccharide umfassen dabei Disaccharide bis hin zu Decasacchariden, bevorzugt werden Disaccharide bis Hexasaccharide verwendet. Üblicherweise sind die Oligosaccharide bei Raumtemperatur fest. Es kann sich auch um Mischung von verschiedenen Oligoscchariden handeln, mit zwei oder mehr Komponenten; im weiteren Text sei zusammenfassend der Begriff Oligosaccharide verwendet.

### Bevorzugt weist das Oligosaccharid ein Tetrasaccharid auf.

Die Oligosaccharide können eine Komposition darstellen, die aus Zersetzung von Polysacchariden erhalten wurde. Die Oligosaccharidkomposition umfasst beispielsweise Stärkezucker, Galaktooligosaccharid, Zuckerverbindungen, Mehrfachfruchtzucker, Xylooligosaccharide, Sojabohnenoligosaccharide, Chitinoligosaccharide, und Chitan-Oligosaccharide. Diese Zusammensetzungen können einzeln oder in Kombination verwendet werden.

Die Oligosaccharide können vom reduzierenden Typ sein (Maltose-Typ) oder vom nicht-reduzierenden Typ (Trelahose-Typ). Ersterer wird bevorzugt wegen der besseren Temperaturstabilität.

### Weichmachende Komponente

Die weichmachende Komponente stabilisiert die Viskosität des Oligosaccharides, welche sich leicht nach oben bewegen kann und zu Schwierigkeiten bei der Verarbeitung führen kann. Sie kann ein Saccharid oder ein Zuckeralkohol sein und ist optional.
Falls ein Saccharid verwendet wird, handelt es sich bevorzugt um ein Mono- oder Disaccharid. Auch cyclische Isomere von Monosacchariden seien genannt. Saccharid-Derivate mit beispielsweise Methyl-, Acyl-, Carbonyl- Endgruppen sind ebenfalls umfasst. Wichtigstes Kriterium für die weichmachende Hilfskomponente ist die weichmachende Wirkung bzw. Viskositätsverringerung in Bezug auf das Oligosaccharid (innere Schmierung).

Falls ein Zuckeralkohol verwendet wird, kann er linear oder cyclisch aufgebaut sein, wobei ersteres bevorzugt wird. Beispiel für den Zuckeralkohol sind Tetrytol, Pentitol, oder Hexitol bis hin zu Dodecitol. Bevorzugt sind Erythrol, Pentaerythrol, Arabitol, Ribitol, Xylitol, Sorbitol, Dulcitol, Mannitol. Besonders bevorzugt wird Erythrol, Pentaerythrol, oder Xylitol verwendet.

### Weitere Additive

Wenn nötig, kann die Dispersion weitere Additive aufweisen. Beispielhaft seien Füllstoffe, Stabilisatoren, Verdickungsmittel, Farben (Pigmente), Gleitmittel, Dispersionshilfe, Antistatikmittel, oder Flammschutzadditive genannt. Die Füllstoffe können Glimmer, Ton, Talkum oder auch Rayonfasern sein, ohne die Erfindung darauf beschränken zu wollen. Besonders seinen Glaskugeln oder-fasern genannt, Carbonfasern, auch gemahlen, und Metallpartikel.

### Prozess

Es wird zusätzlich ein Prozess beschrieben, bei dem die Hilfskomponente (B) von der Dispersion getrennt wird, wobei die Dispersion zur Herstellung eines Körpers (beispielsweise aus einem porösen Material, oder einen Partikel), der ein Polymer aufweist, verwendet wird.

Die Dispersion kann hergestellt werden, indem die Polymerkomponente mit der Hilfskomponente verknetet wird. Dabei wird oft schon die spätere Form des Partikels vorbereitet. Der Knetprozess kann durchgeführt werden in einem konventionellen Kneter (beispielsweise im Ein- oder Doppelschneckenextruder, oder im Kneter oder Kalander). Die dafür benötigte Zeit kann zwischen 10 Sekunden und einer Stunde betragen, bevorzugt zwischen 30 Sekunden und 45 Minuten, und besonders bevorzugt zwischen 1 und 13 Minuten. Es kann vorteilhaft sein, die Polymerkomponente und die Hilfskomponente schon zuvor durch Kaltmahlen oder Vorkneten in eine pulverähnliche Form zu bringen.

Beispiele für umformende Verfahren, mit denen der Körper geformt wird, sind Extrusion, Spritzguss, Blasformen, oder Kalanderverfahren. Im Hinblick auf Produktivität und einfache Herstellung wird Extrusion oder Spritzguss bevorzugt. Die Form des vorläufigen Körpers ist nicht beschränkt, sie kann Partikel- oder Granulatform aufweisen, eine eindimensionale Form aufweisen wie beispielsweise Stabform oder Faserform, oder ein Strang, oder eine zweidimensionale Form aufweisen wie beispielsweise eine Platte oder eine Folie, oder auch eine dreidimensionale Form wie zum Beispiel eine Röhre, ein Zylinder, oder ein Block. Für die Abtrennung der Hilfskomponente ist es vorteilhaft, eine ein- oder zweidimensionale Form zu nutzen. Der vorläufige Körper kann auch dazu verwendet werden, um ein weiteres Material zu beschichten in einem umformenden Prozess.
Es ist offensichtlich, dass die Knettemperatur, bzw. die Temperatur im Umformverfahren, von den verwendeten Ausgangsmaterialien (beispielsweise Polymerkomponente oder Hilfskomponente) abhängt. Bevorzugt liegt die Knet- oder Umformtemperatur zwischen 90 und 300 °C, besonders bevorzugt zwischen 110 und 260 °C, und ganz besonders bevorzugt zwischen 140 und 240 °C. Um thermische Zersetzung der Hilfskomponente (Oligosaccharid und weichmachende Komponente) zu vermeiden, ist es ratsam, bei Temperaturen bis maximal 230 °C zu arbeiten.

Das disperse System (eine Form, in der die Polymerkomponente und die Hilfskomponente in disperser Form vorliegen) kann durch Abkühlen einer aufgeschmolzenen Mischung erzeugt werden (beispielsweise aus dem Kneter, oder aus dem vorläufigen Körper), wobei die aufgeschmolzene Mischung die Polymerkomponente und die Hilfskomponente aufweist. Die Abkühltemperatur sollte wenigstens 10 °C unter der Wärmeformbeständigkeit der Polymerkomponente liegen, oder unter dem Schmelz- oder Erweichungspunkt der Hilfskomponente.

Die Abkühlzeit wird auf die Polymerkomponente und die Hilfskomponente abgestimmt, ein weiterer Einflussfaktor ist die Abkühltemperatur; die Abkühlzeit kann beispielsweise in einem weiten Bereich zwischen 30 Sekunden und 20 Stunden liegen. Beispiele für bevorzugte Zeiten sind 1,5 bis 30 Minuten.
Besonders in den Fällen, in denen die Polymer- und die Hilfskomponente kompatibel zueinander sind, kann das disperse System dadurch erhalten werden, dass unterschiedliche Zustände der Oberflächenspannung und Verfestigung, beispielsweise durch Kristallisation, ausgenutzt werden, um während des Abkühlens das disperse System auszubilden.
Falls ein poröser Körper oder ein Partikel erzeugt wird, kann die durchschnittliche Porengröße bzw. die Partikelgröße beeinflusst werden durch Abstimmung der Kompatibilität zwischen Polymer- und Hilfskomponente, durch den Viskositätsunterschied zwischen den Komponenten, durch die Knet- bzw. Umformbedingungen, sowie die Abkühlbedingungen, so dass sich ein weiter Bereich von Porengröße und Porenverteilung bzw. von Partikelgröße und Partikelgrößenverteilung gezielt eingestellt werden kann. Durch Anpassung der Bedingungen kann aus gleicher Zusammensetzung der Komponenten sowohl ein poröser Körper wie auch ein Partikel hergestellt werden.
Beispielhafte Werte für die durchschnittliche Poren- oder Partikelgröße sind 0,1 µm bis 1 mm.

Der vorläufige Körper bzw. das disperse System wird mit einer Lösung zusammengebracht, um die Hilfskomponente von der Polymerkomponente zu trennen oder auszuwaschen. Beispiele für das Lösemittel sind Wasser, wasserlösliche Lösemittel (alkoholische Zusammensetzungen wie Methanol, Ethanol, Propanol, Isopropanol oder Butanol) sowie eine Etherzusammensetzung.

Das bevorzugte Lösemittel ist Wasser, es ist preiswert und umweltfreundlich. Die Abtrennung der Hilfskomponente kann unter Umgebungsdruck, einem erhöhten Druck oder unter Vakuum durchgeführt werden. Die Temperatur beim Abtrennen der Hilfskomponente hängt von den Komponenten ab und liegt beispielsweise zwischen 10 und 100 °C.

Der Körper bzw. Partikel wird beispielsweise durch Filtration oder Zentrifugalkraft gesammelt. Es ist vorteilhaft, so wenig wie möglich an Resten der Hilfskomponente darin zu haben.

Der Körper, der durch Abtrennen der Hilfskomponente entsteht, ist in seiner Form nicht limitiert. Es kann sich dabei um einen porösen Körper handeln, aber auch um einen Partikel, der eine runde Form aufweisen kann.

Für die Verwendung im erfindungsgemäßen Verfahren sind Partikel mit möglichst runder Form von Vorteil.

Zu Erzeugung von Partikeln mit einem mittleren Korndurchmesser zwischen 20 und 120 µm, welche im erfindungsgemäßen Verfahren werden, wird bevorzugt mit einem Gewichtsverhältnis der Polymerkomponente und der wasserlöslichen Hilfskomponente zwischen 1:99 und 35:60 gearbeitet. Aus gleichem Grund wird bevorzugt ein Viskositätsverhältnis der Polymerkomponente und der wasserlöslichen Hilfskomponente bei den Verarbeitungstemperaturen und einer Scherrate von 608 1/s von mindestens 5:1 eingestellt. Es versteht sich von selbst, dass dieses Vergleichsverhältnis für eine Temperatur gilt, in der die Polymerkomponente sich in aufgeschmolzenem und verarbeitbarem Zustand befindet; die Temperaturabhängigkeit der Viskosität der wasserlöslichen Hilfskomponente folgt im allgemeinen dem Gesetz von Arrhenius.

Gegebenenfalls wird eine Schutzsiebung und weitere Klassierung des so erhaltenen Pulvers angeschlossen. Auch eine Nachbehandlung in einem schnelllaufenden Mischer zur weiteren Verrundung der Partikel kann Vorteile bringen. Meist ist die Zugabe einer Rieselhilfe nach dem Stand der Technik empfehlenswert.

Der Fachmann kann die Bedingungen für die Verarbeitung im erfindungsgemäßen pulverbasierenden werkzeuglosen Herstellverfahren leicht durch orientierende Vorversuche herausfinden.

Die BET-Oberfläche liegt bei dem aus der Dispersion hergestellten Pulver kleiner als 10 m²/g, bevorzugt kleiner als 3 m²/g und besonders bevorzugt kleiner als 1 m²/g. Der mittlere Korndurchmesser D50 liegt bevorzugt zwischen 20 und 120 µm, bevorzugt zwischen 35 und 100 µm und besonders bevorzugt zwischen 40 und 70 µm.

Die Viskosität des Polymeren muss so bemessen sein, dass eine Verarbeitung im erfindungsgemäßen Verfahren gut möglich ist. Verallgemeinert eignet sich ein eher niedrigviskoses Material besser; Molekulargewichte wie beim Spritzguss für das jeweilige Polymer üblich, sind den für die Extrusion optimierten Materialien vorzuziehen. Bei der Umwandlung in eine pulvrige Form mit Hilfe des oben beschriebenen Verfahrens kann das Molekulargewicht des Ausgangsstoffes sich verändern; dabei sind sowohl Abweichungen nach oben als auch nach unten in den Experimenten festgestellt worden.

Die Kornverteilung der so erhaltenen Pulver ist relativ breit; D90 zu D10 liegt zwischen 3:1 und 15:1, bevorzugt zwischen 4:1 und 10:1.

Die Schüttdichte der Pulver zur Verwendung im erfindungsgemäßen Verfahren liegt bevorzugt im Bereich zwischen 300 und 600 g/l.

Die BET-Oberfläche wird durch Gasadsorption nach dem Prinzip von Brunauer, Emmet und Teller ermittelt; die herangezogene Norm ist die DIN ISO 9277.

Polymerpulver zur Verwendung in einem erfindungsgemäßen Verfahren kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Die Pigmente können beispielsweise Titandioxidpartikel basierend auf Rutil (bevorzugt) oder Anatas sein oder Rußpartikel.

Auch die Zugabe von Absorbern, die die Verarbeitung im erfindungsgemäßen Verfahren erleichtern kann, soll hier erwähnt werden. Als besonders vorteilhaft hat sich die Zugabe von Ruß erwiesen.

Die Füllstoffpartikel weisen dabei vorzugsweise eine kleinere oder ungefähr gleich große mittlere Partikelgröße wie die Partikel des Polymerpulvers auf. Vorzugsweise sollte die mittlere Partikelgröße d₅₀ der Füllstoffe die mittlere Partikelgröße d₅₀ des Polymerpulvers um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Vorzugsweise weist erfindungsgemäßes Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polymere, auf.

Beim Überschreiten der angegebenen Höchstgrenzen für Hilfs- und/oder Füllstoffe kann es je nach eingesetztem Füll- oder Hilfsstoff zu deutlichen Verschlechterungen der mechanischen Eigenschaften von Formkörpern kommen, die mittels solcher Polymerpulver hergestellt wurden.

Es ist ebenso möglich, herkömmliche Polymerpulver mit Polymerpulvern hergestellt in einer Dispersion wie oben beschrieben zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden. Besonders vorteilhaft wird dabei das mittels Dispersion hergestellte Polymerpulver, welches eine eher runde Partikelform aufweist, mit einem durch Kaltvermahlung erhaltenen Polymerpulver, dessen Partikel deutlich scharfkantiger sind, gemischt. Dabei wirkt das durch die Dispersion hergestellte Polymerpulver wie eine Rieselhilfe, so dass die dem Mahlpulver zuzuordnenden Verarbeitungsschwierigkeiten durch die Verwendung einer solchen Mischung vermieden werden können. Vorteilhaft sind Mischungen, die zumindest 30 % Polymerpulver hergestellt aus einer Dispersion wie oben beschrieben, aufweisen, besonders vorteilhaft Mischungen, die zumindest 40 % davon aufweisen, und ganz besonders vorteilhaft sind Mischungen, die zumindest 50 % eines solchen Polymerpulvers aufweisen.

Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, sowie Füllstoffpartikel zugegeben werden. Vorzugsweise wird, bezogen auf das Gesamtgewicht an Polymeren im Polymerpulver, so viel dieser Stoffe den Polymeren zugegeben, dass die für das erfindungsgemäße Polymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche der jeweiligen Schicht aufgeschmolzen werden, unter Verwendung von Polymerpulvern, welche dadurch gekennzeichnet sind, dass sie aus einer Dispersion hergestellt wurden, die zumindest eine Polymerkomponente und eine wasserlösliche Hilfskomponente aufweist, wobei die Hilfskomponente wiederum zumindest ein Oligosaccharid.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die erfindungsgemäßen Formkörper, die durch ein schichtweise arbeitendes Verfahren, bei dem selektiv Bereiche aufgeschmolzen werden, hergestellt werden, zeichnen sich dadurch aus, dass dabei Pulver, welches aus einer Dispersion hergestellt wurde, die zumindest eine Polymerkomponente und eine wasserlösliche Hilfskomponente aufweist, wobei die Hilfskomponente wiederum zumindest ein Oligosaccharid aufweist, verwendet wurde.

Die Formkörper können außerdem Füllstoffe und/oder Hilfsstoffe (hier gelten die Angaben wie für das Polymerpulver), wie z. B. thermische Stabilisatoren, wie z. B. sterisch gehinderte Phenolderivate, aufweisen. Füllstoffe können z. B. Glas-, Keramikpartikel und auch Metallpartikel, wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die Schmelzpunkte wurden mittels DSC (Differential Scanning Calorimetry) nach DIN 53765, bzw. nach AN-SAA 0663 bestimmt. Die Messungen wurden mit einem Perkin Elmer DSC 7 mit Stickstoff als Spülgas und einer Aufheizrate sowie Abkühlrate von 20 K/min durchgeführt. Der Messbereich betrug -90 bis +250 °C.

Die Lösungsviskosität für die Beispiele wird dabei nach DIN EN ISO 307 in 0,5%iger m-Kresollösung ermittelt.

Die Schüttdichte wurde mit einer Apparatur gemäß DIN 53 466 ermittelt.

Die Messwerte der Laserbeugung wurden an einem Malvern Mastersizer S, Ver. 2.18 erhalten.

Die folgenden Beispiele sollen das erfindungsgemäße Verfahren beschreiben, ohne die Erfindung auf die Beispiele einzuschränken.

### Vergleichsbeispiel 1

Polymerpulver nach DE 10 2005 008 044.8, Blockpolyetheramid

Zur Herstellung eines PEA basierend auf PA12 mit Hartblock von 1068 dalton und Jeffamin D2000 wurde eine 200 I-Zweikessel-Polykondensationsanlage - bestehend aus Ansatzbehälter mit Ankerrührer und Polykondensationsreaktor mit Wendelrührer - mit folgenden Einsatzstoffen beschickt:
1. Chargierung:
   28,797 kg Laurinlactam,
   7,547 kg Dodecandisäure, sowie
2. Chargierung
   67,509 kg Jeffamine D2000,
   100,0 g einer 50 %igen wässrigen Lösung von Hypophosphoriger Säure (entspricht 0,05 Gew.-%).

Die Einsatzstoffe der 1. Chargierung wurden in einer Stickstoffatmosphäre bei 180°C aufgeschmolzen, in den Polykondensationsreaktor gedrückt und unter Rühren im geschlossenen Autoklaven 6 Stunden auf ca. 280 °C erhitzt. Währenddessen wurde im Ansatzbehälter die 2. Chargierung auf 180°C vorgewärmt und zur Oligoamid-Dicarbonsäureschmelze im Polykondensationsreaktor gedrückt. Nach Entspannen auf Normaldruck wird diese Mischung bei 220°C ca. 6 Stunden im Stickstoffstrom unter Rühren bei dieser Temperatur gehalten. Anschließend wurde innerhalb von 2 Stunden ein Vakuum von 100 mbar angelegt und bis zum Erreichen des gewünschten Drehmoments gehalten. Danach wurde die Schmelze unter 10 bar Stickstoffdruck gesetzt und mittels Zahnradpumpe ausgetragen und als Strang granuliert. Das Granulat wurde 24 Stunden unter Stickstoff bei 80 °C getrocknet.
Austrag: 92kg
Das Produkt wies folgende Kennwerte auf:
Kristallitschmelzpunkt Tₘ: 153 °C
Relative Lösungsviskosität ηᵣₑₗ: 1,60
COOH-Endgruppen: 11 mmol/kg
NH₂- Endgruppen : 42 mmol/kg
Wie die REM-Aufnahme zeigt, sind die Partikel sehr kantig.

### Vergleichsbeispiel 2

Polymerpulver nach DE 10 2005 008 044.8, Blockpolyetheramid
Zur Herstellung eines PEA basierend auf PA12 mit Hartblock von 7225 dalton und Jeffamin D400 wurde eine100 1-Zweikessel-Polykondensationsanlage - bestehend aus Ansatzbehälter mit Ankerrührer und Polykondensationsreaktor mit Wendelrührer - mit folgenden Einsatzstoffen beschickt:
1. Chargierung:
   43,566 kg Laurinlactam,
   1,434 kg Dodecandisäure, sowie
2. Chargierung
   2,938 kg Jeffamine D400,
   47,0 g einer 50 %igen wässrigen Lösung von Hypophosphoriger Säure (entspricht 0,05 Gew.-%).

Die Einsatzstoffe der 1. Chargierung wurden in einer Stickstoffatmosphäre bei 180°C aufgeschmolzen, in den Polykondensationsreaktor gedrückt und unter Rühren im geschlossenen Autoklaven 6 Stunden auf ca. 280 °C erhitzt. Währenddessen wurde im Ansatzbehälter die 2. Chargierung auf 180°C vorgewärmt und zur Oligoamid-Dicarbonsäureschmelze im Polykondensationsreaktor gedrückt. Nach Entspannen auf Normaldruck wird diese Mischung bei 230°C ca. 6 Stunden im Stickstoffstrom unter Rühren bei dieser Temperatur gehalten. Anschließend wurde innerhalb von 2 Stunden ein Vakuum von 100 mbar angelegt und bis zum erreichen des gewünschten Drehmoments gehalten. Danach wurde die Schmelze unter 10 bar Stickstoffdruck gesetzt und mittels Zahnradpumpe
ausgetragen und als Strang granuliert. Das Granulat wurde 24 Stunden unter Stickstoff bei 80 °C getrocknet.
Austrag: 44 kg
Das Produkt wies folgende Kennwerte auf:
Kristallitschmelzpunkt Tₘ: 173,4 °C
Relative Lösungsviskosität ηᵣₑₗ: 1,84
COOH-Endgruppen: 38 mmol/kg NH₂ - Endgruppen : 39 mmol/kg

### Beispiel 1

Es wurde das Granulat aus dem Vergleichsbeispiel 2 weiterverwendet. Es wurde zu 35 Teilen eingesetzt. Außerdem wurden 45 Teile eines Oligosaccharids zugegeben (PO-10 von der Towa Chemical Industries) sowie 20 Teile Penthaerythritol. Das Material wurde im Laborkneter bei 170 °C für 10 Minuten verknetet; anschließend bleib die Mischung noch 8 Minuten bei 30 °C stehen. Nach Abkühlen werden die Komponenten mit Hilfe von Wasser durch Lösen des Oligosaccharids voneinander getrennt. Das nach der Trocknung erhaltene Polymerpulver hat eine Schüttdichte von 362 g/l, und eine Kornverteilung d10/d50/d90 von 18/54/114 µm. Die BET-Oberfläche liegt bei weniger als 1 g/m². Der Schmelzpunkt liegt bei 153 °C. Es lassen sich Aminoendgruppen von 27 mmol/kg und Carboxylgruppen von 15 mmol/kg nachweisen. Wie die REM-Aufnahme zeigt, sind die Partikel sehr rund.

### Beispiel 2

Es wurde das Granulat aus dem Vergleichsbeispiel 2 weiterverwendet. Es wurde zu 22 Teilen eingesetzt. Außerdem wurden 58 Teile eines Oligosaccharids zugegeben (PO-10 von der Towa Chemical Industries) sowie 20 Teile Penthaerythritol. Das Material wurde im Laborkneter bei 200 °C für 5 Minuten verknetet; anschließend bleib die Mischung noch 10 Minuten bei 30 °C stehen. Nach Abkühlen werden die Komponenten mit Hilfe von Wasser durch Lösen des Oligosaccharids voneinander getrennt. Das nach der Trocknung erhaltene Polymerpulver hat eine Schüttdichte von 532 g/l, und eine Kornverteilung d10/d50/d90 von 18/45/91 µm. Die BET-Oberfläche liegt bei weniger als 1 g/m². Der Schmelzpunkt liegt bei 174 °C. Es lassen sich Aminoendgruppen von 22 mmol/kg und Carboxylgruppen von 54 mmol/kg nachweisen.

### Vermahlung der Granulate:

Die Materialien aus den Vergleichsbeispielen 1 und 2 werden bei -40 °C vermahlen. Bei der verwendeten Mühle handelt es sich um eine Hosokawa Alpine Contraplex-Stiftmühle 160 C.
Die Pulver wurden bei 100 µm gesiebt, um sicherzustellen, dass zu grobe Partikel den Bauprozess nicht stören können.

### Verarbeitung:

Alle Pulver wurden auf einer EOSINT P360 der Firma EOS GmbH, Krailling, verbaut. Es handelt sich um eine Lasersintermaschine. Der Bauraum wurde bis nahe an den Schmelzpunkt der jeweiligen Probe vorgeheizt. Die Parameter für den Laser, wie Geschwindigkeit, Leistung, wurden durch Ausprobieren jeweils an das Material angepasst. Die nicht erfindungsgemäßen Materialien waren deutlich schwieriger zu verarbeiten, insbesondere, was eine riefenfreie Auftragung der jeweiligen Pulverschicht betrifft und damit die Automatisierbarkeit.
Alle Pulver aus den Beispielen wurden im Dry Blend auf einem MTI-Mischer M20 bei 400 UPM mit 0,1 Teil Aerosil 200 versehen.

| | Elastizitätsmodul | Zugfestigkeit | Reißdehnung | Kerbschlag RT | Kerbschlag -30 | Dichte |
|---|---|---|---|---|---|---|
| | N/mm² | N/mm² | % | kJ/m² | kJ/m² | g/mm³ |
| Vergleichsbeispiel 1 | 87 | 9 | 190,9 | Kein Bruch | Kein Bruch | 0,86 |
| Vergleichsbeispiel 2 | 1323 | 41,4 | 8,7 | 3,1 | 5,7 | 0,78 |
| Beispiel 1 | 84 | 7,5 | 60,9 | 35 | | 0,95 |
| Beispiel 2 | 1125 | 40,6 | 12,3 | 3 | 3,8 | 0,94 |

Insbesondere die Dichte der erfindungsgemäß hergestellten Prüfkörper liegt nahe bei der Dichte des Polymer an sich. Es sind deutlich weniger Fehlstellen und Lunker in dem Bauteil zu finden. Bei den weichen Einstellungen (Vergleichsbeispiele 1 und Beispiel 1) wirkt sich das nicht so sehr auf die übrigen mechanischen Eigenschaften aus; je härter das Material, desto stärker fallen sie ab, wenn mehr Lunker im Bauteil enthalten sind. Das runde Korn wirkt sich sehr positiv auf den Bauprozess und die Bauteilqualität aus. Fällen lässt sich das Pulver aus den Vergleichsbeispielen nicht.

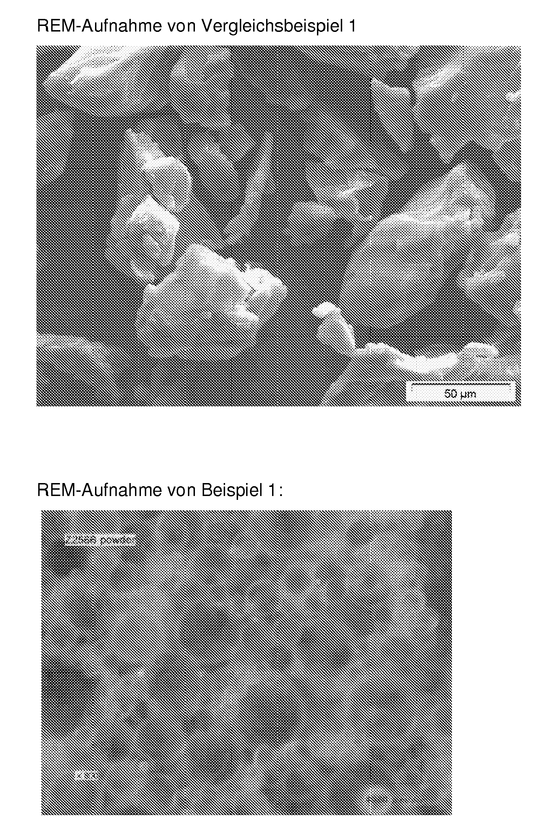

## Patentansprüche

**1.** Verfahren zur schichtweisen werkzeuglosen Herstellung von dreidimensionalen Formkörpern unter Verwendung von Pulver, bei dem selektiv Bereiche der jeweiligen Pulverschicht durch den Eintrag elektromagnetischer Energie aufgeschmolzen werden,
**dadurch gekennzeichnet,**
**dass** das Pulver zumindest ein Polymer- oder Copolymerpulver aufweist, welches aus einer Dispersion hergestellt wurde, die zumindest ein Polymer oder Copolymer und eine wasserlösliche Komponente aufweist, die wiederum zumindest ein Oligisaccharid aufweist.

**2.** Verfahren nach Anspruch 1,
**dadurch gekennzeichnet,**
**dass** das Polymer oder Copolymer durch Polymerisation, Polykondensation, Polyaddition oder aus Naturstoffen hergestellt wurde.

**3.** Verfahren nach einem der vorhergehenden Ansprüche,
**dadurch gekennzeichnet,**
**dass** das Polymer oder Copolymer einen Thermoplasten, ein Duromer, ein Elastomer, oder Kombinationen daraus, aufweist.

**4.** Verfahren nach einem der vorhergehenden Ansprüche,
**dadurch gekennzeichnet,**
**dass** das Polymer oder Copolymer zumindest aus einem Baustein der Gruppe der Polyester, Copolyester, Polyamide, Copolyamide besteht.

**5.** Verfahren nach einem der vorhergehenden Ansprüche,
**dadurch gekennzeichnet,**
**dass** das Polymer oder Copolymer zumindest aus einem Baustein der Gruppe der Polysulfone, Polyaryletheretherketone, Polyimid, besteht.

**6.** Verfahren nach einem der vorhergehenden Ansprüche,
**dadurch gekennzeichnet,**
**dass** das Polymer oder Copolymer zumindest aus einem Baustein der Gruppe der Polycarbonat, PMMA, PMMI, besteht.

**7.** Verfahren nach einem der vorhergehenden Ansprüche,
**dadurch gekennzeichnet,**
**dass** das Gewichtsverhältnis der Polymerkomponente und der wasserlöslichen Hilfskomponente in der Dispersion zwischen 1:99 und 35:60 liegt.

**8.** Verfahren nach einem der vorhergehenden Ansprüche,
**dadurch gekennzeichnet,**
**dass** das verwendete Polymerpulver eine BET-Oberfläche nach DIN ISO 9277 kleiner oder gleich 10 m²/g aufweist.

**9.** Verfahren nach einem der vorhergehenden Ansprüche,
**dadurch gekennzeichnet,**
**dass** das verwendete Polymerpulver eine BET-Oberfläche nach DIN ISO 9277 kleiner oder gleich 3 m²/g aufweist.

**10.** Verfahren nach einem der vorhergehenden Ansprüche,
**dadurch gekennzeichnet,**
**dass** das verwendete Polymerpulver eine BET-Oberfläche nach DIN ISO 9277 kleiner oder gleich 1 m²/g aufweist.

**11.** Verfahren nach einem der vorhergehenden Ansprüche,
**dadurch gekennzeichnet,**
**dass** das verwendete Polymerpulver mittleren Korndurchmesser zwischen 10 und 120 µm aufweist.

**12.** Verfahren nach einem der vorhergehenden Ansprüche,
**dadurch gekennzeichnet,**
**dass** das verwendete Polymerpulver mittleren Korndurchmesser zwischen 35 und 100 µm aufweist.

**13.** Verfahren nach einem der vorhergehenden Ansprüche,
**dadurch gekennzeichnet,**
**dass** das verwendete Polymerpulver mittleren Korndurchmesser zwischen 40 und 70 µm aufweist..

**14.** Verfahren nach einem der vorhergehenden Ansprüche,
**dadurch gekennzeichnet,**
**dass** das verwendete Polymerpulver eine Schüttdichte nach DIN 53466 zwischen 300 und 600 g/l aufweist.

**15.** Verfahren nach einem der vorhergehenden Ansprüche,
**dadurch gekennzeichnet,**
**dass** das verwendete Polymerpulver eine Kornverteilung d90 zu d10 zwischen 3:1 und 15:1 aufweist.

**16.** Verfahren nach einem der vorhergehenden Ansprüche,
**dadurch gekennzeichnet,**
**dass** das verwendete Polymerpulver Hilfs- und oder Füllstoffe aufweist.

**20.** Verfahren nach einem der vorhergehenden Ansprüche,
**dadurch gekennzeichnet,**
**dass** das verwendete Polymerpulver Rieselhilfsmittel aufweist.

**21.** Verfahren nach einem der vorhergehenden Ansprüche,
**dadurch gekennzeichnet,**
**dass** es als Füllstoff anorganische Partikel aufweist.

**22.** Verfahren nach einem der vorhergehenden Ansprüche,
**dadurch gekennzeichnet,**
**dass** es organische und/oder anorganische Pigmente aufweist.

**23.** Verfahren nach einem der vorhergehenden Ansprüche,
**dadurch gekennzeichnet,**
**dass** es Ruß aufweist.

**24.** Verfahren nach einem der vorhergehenden Ansprüche,
**dadurch gekennzeichnet,**
**dass** es Titandioxid aufweist.

**25.** Formkörper, hergestellt durch eines der Verfahren aus den vorhergehenden Ansprüchen.
